Europäisches Patentamt

European Patent Office

Office européen des brevets

(11) Publication number: **0 127 289**
**B1**

(12) **EUROPEAN PATENT SPECIFICATION**

(45) Date of publication of patent specification: **25.11.87**

(21) Application number: **84302265.8**

(22) Date of filing: **03.04.84**

(51) Int. Cl.⁴: **B 01 D 1/28,** B 01 D 3/00,
B 01 D 3/04

(54) Distilling apparatus operating on the thermocompressor principle.

(30) Priority: **20.05.83 FI 831797**

(43) Date of publication of application:
**05.12.84 Bulletin 84/49**

(45) Publication of the grant of the patent:
**25.11.87 Bulletin 87/48**

(84) Designated Contracting States:
**AT BE CH DE FR GB IT LI NL SE**

(56) References cited:
**GB-A-1 583 101**
**US-A-4 282 067**
**US-A-4 319 964**

**INDUSTRIAL AND ENGINEERING CHEMISTRY,**
**vol. 54, no. 3, March 1962; E.A. CADWALLADER**
**"Domestic Desalination Units", pages 26-33**

(73) Proprietor: **OY-FINN-AQUA LTD.,**
**Hankasuontie 4-6**
**SF-00390 Helsinki 39 (FI)**

(72) Inventor: **Huhta-Koivisto, Esko**
**Säynävätie 4B**
**02170 Espoo (FI)**

(74) Representative: **Lee, Philip Graham**
**MARKS & CLERK 57/60 Lincoln's Inn Fields**
**London WC2A 3LS (GB)**

EP 0 127 289 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to distillation apparatus operating on the thermocompressor principle, comprising a housing, a boiling space within the housing for the liquid to be distilled, a heating means for heating the liquid to be distilled in the boiling space, a feed line for conducting the liquid to be distilled into the boiling space, a blower disposed to impart extra energy to the vapour produced from the liquid to be distilled in the boiling space, whereby the temperature of the vapour increases on the discharge side of the blower, and a discharge line for removing the distillate from the distillation apparatus, there being provided within the distillation apparatus at least one heat exchange tube, along which a mixture composed of liquid to be distilled and vapour has been arranged to flow, and a droplet separator based on centrifugal separation.

The principle of operation of a distillation apparatus operating on the thermocompressor principle known in the art is in brief as follows. The liquid to be distilled is heated in the boiling space, whereby the liquid to be distilled evaporates into the top part of the boiling space, and the temperature of the vapour is about 96°C. The compressor draws vapour from the top part of the boiling space and imparts extra energy to the vapour, whereby the temperature of the vapour rises on the discharge side of the compressor to about 105°C. This hotter vapour is conducted along a helical tube through the boiling space, whereby the vapour condenses to distillate, and the distillate is removed as outflow from the distillation apparatus. The condensing vapour naturally gives off its heat to the liquid to be distilled in the boiling space. An advantage of this prior art distillation apparatus is its low energy consumption, about 4 kw per 100 litres distilled liquid per hour. The greatest drawback is the access of impurities into the evaporated distillate flowing through the compressor, for which reason it is not possible with this prior art distillation apparatus to achieve an absolutely pure distillate. In addition, the distillation apparatus is exceedingly massive and generates objectionable noise when in operation.

This prior art distillation apparatus operating on the thermocompressor principle known in the art has been improved so that the temperature of the vapour formed in the upper part of the boiling space is over 100°C, usually about 105°C, whereby excess pressure prevails throughout the boiling space. Correspondingly, the vapour temperature on the discharge side of the compressor rises to about 120°C. Otherwise, the good and bad features of the improved distillation apparatus are the same as those of the distillation apparatus described above.

A distillation apparatus operating on the thermocompressor principle is also known in the art in which the temperature of the vapour formed from the liquid to be distilled is raised by means of a heat pump. In this prior art design, two separate heat exchangers are used, one in the upper part of the boiling space, and the other in the lower part of the boiling space. This design is exceedingly expensive and requires a complex control mechanism.

In Finnish Patent 61999 (EP—B—0061854) there is also disclosed a distillation apparatus operating on the thermocompressor principle. This distillation apparatus comprises a housing, a boiling space for the liquid to be distilled, heating means for heating the liquid to be distilled in the boiling space, a feed line for conducting the liquid to be distilled into the boiling space, a means arranged to impart extra energy to the vapour which is formed from the liquid being distilled, whereby the temperature of the vapour rises on the discharge side of the means, and an outlet line for removing the distillate from the distilling means. In order to obtain a distillation apparatus operating on the thermocompressor principle with simple control technology, requiring little water space, having fast initial heating of the liquid to be distilled, having efficient droplet separation, producing distillate of excellent purity, consuming little energy and which is of size and simple construction, within such apparatus there has been disposed at least one heat exchange tube along which the mixture formed by the liquid being distilled and by vapour is arranged to flow. There is disposed within the distilling apparatus a droplet separator based on dynamic centrifugal separation and defining together with the wall of the boiling space between the boiling space and the droplet separator a gap through which the mixture of liquid being distilled and vapour discharging from the heat exchange tube flows. As the mixture composed of liquid being distilled and of vapour flows through the gap, the vapour is arranged to flow through the droplet separator into a means imparting extra energy to the vapour. This means is a blower disposed inside the distilling means. The droplet separator is a droplet separator with helical vanes. A waste pipe is provided in the boiling space. The heat exchange tubes are placed around the boiling space. The heating means is placed under the heat exchange tube. The drive means for the blower is a motor with a short-circuited rotor, fitted to drive the blower by magnetic transmission through the end wall of the distillation apparatus. The vapour condensing space is arranged to encircle the heat exchange tube.

Although the distillation apparatus of Finnish Patent 61999 is excellent in construction and principle of operation, it is encumbered by some drawbacks. First, the return of the vapour from the compressor to the condenser is unsatisfactory, since the vapour has to be carried in a complicated manner through "water wells". It is also necessary to circulate the effluent, with the consequence that the structures of the distilling means are contaminated. Thirdly, the blower which imparts extra energy to the vapour has been placed at the upper end of the distilling apparatus, with the consequence of inconvenient maintenance and a comparatively massive structure.

The object of the invention is to achieve an improvement in distillation apparatus operating on the thermocompressor principle known at present.

The object of the invention is achieved by a distillation apparatus operating on the thermocompressor principle which is characterized in that within the distillation apparatus there is disposed substantially in the centre, a central tube with an inner tube inside it, whereby in the central tube there is defined an annular flow duct, that the annular duct is closed by a closure as at a point substantially below the middle, that the annular duct portion below the closure has a discharge aperture, and that the blower is placed in the lower part of the distillation apparatus means, the mixture composed of liquid to be distilled and of generated vapour being caused to flow from the heat exchange tube via the portion of the annular flow duct above the closure and through the central tube to the blower provided to impart extra energy to the vapour and to conduct the vapour into the annular duct below the closure of the annular duct, whence the vapour discharges through the discharge aperture into the condenser.

Optional features of the distillation apparatus of the invention are stated in claims 2 and 3.

By the distillation apparatus of the invention operating on the thermocompressor principle, numerous remarkable advantages are gained. In the distilling means of the invention, the vapour can be returned from the compressor to the condenser without having to conduct the vapour in a complicated way through "water wells". Moreover, it has been understood to place the effluent discharge connector inside the central tube, whereby the effluent does not give rise to contaminating circulation in the distillation apparatus. In the distillation apparatus of the invention, the blower which imparts extra energy to the vapour has been placed in the lower part of the distillation apparatus, thus achieving considerably better maintenance and a much lighter construction. In the distillation apparatus of the invention, a very small water space is required, and the initial heating of the liquid to be distilled is very fast. In the distillation apparatus of the invention, the waste heats are returned to the process. The distillation apparatus of the invention has an efficient droplet-separator, owing to the dynamic centrifugal separator. Also the distillation apparatus of the invention is small in size and simple in design and, above all, simple as regards control technology. The distillation apparatus of the invention also generates no objectionable noise. All the favourable features of the distillation apparatus of the invention are moveover combined with low energy consumption.

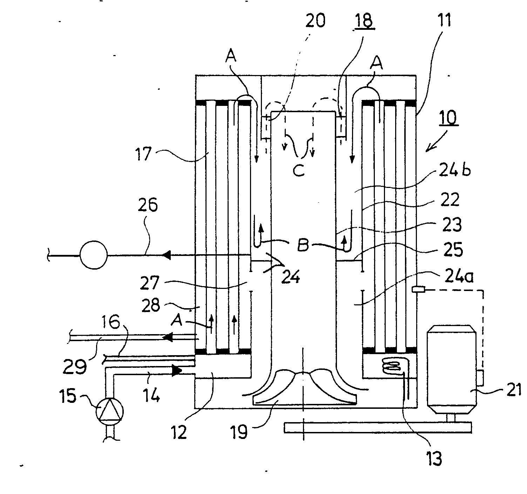

The invention is described in detail, referring to an advantageous embodiment of the invention presented in the figure of the drawing attached, but to which the invention is not intended to be exclusively confined.

The accompanying drawing shows an advantageous embodiment of the distillation apparatus of the invention in schematic cross-sectional projection.

In the embodiment which is illustrated, the distillation apparatus of the invention is indicated generally by reference numeral 10. It comprises a housing 11, within which is a boiling space 12 for liquid to be distilled. Heating means, e.g. an electric coil 13, is arranged to heat the liquid to be distilled in the boiling space 12. The heating means 13 is so placed below a heat exchange tube 17 that the mixture formed by the heated liquid being distilled and by the vapour that has been formed begins to flow along the heat exchange tube 17 as indicated by the arrow A. A pump 15 is provided to pump the liquid being distilled along a feed line 14 to the boiling space 12. In the boiling space 12 is a waste pipe 16, along which part of the liquid being distilled continuously flows. In this manner, the waste pipe 16 operates as a highly efficient and simple stabilizer of the liquid level.

The distillation apparatus 10 furthermore comprises heat exchange tubes 17, along which the mixture of liquid being distilled and of vapour is arranged to flow upwards. Also provided is a droplet separator 18 with helical vanes 20. In the lower part of the distilling means 10 a blower 19 is disposed. Also shown is a drive means 21 arranged to drive the blower 19.

In accordance with the basic idea of the invention, a central tube 22 is located inside the apparatus 10 and contains an inner tube 23, so that in the central tube 22 there is established an annular flow duct 24 between the outer wall and the inner tube 23. The annular duct 24 is closed by a closure 25 at a point below the middle. In the top part of the annular duct 24 is a droplet separator 18, which may have a design like that disclosed in Finnish Patent 61999. In the annular duct 24 there has furthermore been placed an effluent discharge connector 26, and in the annular duct 24a below the closure 24 has been made an annular discharge aperture 27.

In the design of the invention, a mixture of vapour and liquid droplets flows from one end of the annular duct 24 downwards as indicated by the arrow A, and up into the separator 18 as indicated by the arrow B. The droplets fall to the bottom 25 of the annular duct 24, and the pure vapour flows from the separator 18 into the inner tube 23 along which it flows down as indicated by the arrow C and goes to the means 19, which imparts extra energy to the vapour. This means 19 directs the vapour into the annular duct 24a below the bottom 25 of the annular duct 24 through a diffuser. From the duct 24a, the vapour discharges through a discharge aperture 27 into the condenser 28, where the vapour condenses.

The droplets of liquid separated from the vapour accumulate on the bottom 25 of the duct 24, whence the effluent water is removed through the discharge connector 26, whereby circulation of effluent water, conductive to contamination, is avoided.

The design of the invention is thus, as regards the vapour, a so-called "once-through" system, which enables the vapour to be returned from the compressor to the condenser without having to carry the vapour through "water wells".

In the embodiment depicted in the drawing, the means 19 has been placed in the lower part of the distillation apparatus 10, whereby better maintenance and a lighter construction are achieved than if the means 19 were in the upper part of the distillation apparatus 10, as shown in the drawing of Finnish Patent 61999.

The liquid to be distilled present in the boiling space 12 is heated e.g. to about 90°C. The temperature and pressure of the vapour blown by the blower 19 will therefore increase from 95°C to about 105°C. In the condensing space 28, the vapour condenses to distillate against the heat exchange pipes 17, passing its heat to the liquid being distilled. The distillate is withdrawn from the condensing space 28 through a tubular connector 29.

The liquid to be distilled may naturally be heated in the boiling space 12 to a higher temperature, e.g. to about 110°C, in which case correspondingly the temperature of the vapour discharging from the blower 19 will be about 120°C. In the distillation apparatus 10 of the invention it is particularly to be noted that the flow velocity of the mixture of liquid being distilled and of vapour flowing in the heat exchange tubes 17 is very high, of the order of 20 m/s. Similarly, the flow velocity of the vapour flowing through the droplet separator 18 with helical vanes 20 is about 30 m/s.

**Claims**

1. Distillation apparatus (10) operating on the thermocompressor principle, comprising a housing (11), a boiling space (12) within the housing (11) for liquid to be distilled, a heating means (13) for heating the liquid to be distilled in the boiling space (12), a feed line (14) for conducting the liquid to be distilled into the boiling space (12), a blower (19) disposed to impart extra energy to the vapour produced from the liquid being distilled in the boiling space (12) whereby the temperature of the vapour increases on the discharge side of said blower (19), and a discharge line (29) for removing the distillate from the distillation apparatus (10), the inside of said distillation apparatus (10) having at least one heat exchange tube (17) along which the mixture composed of liquid to be distilled and of vapour is arranged to flow, and a droplet separator (18) based on centrifugal separation characterized in that inside the distillation apparatus (10) there is disposed a central tube (22) substantially in the middle, containing within it an inner tube (23), thereby being defined an annular flow duct (24), that the annular duct (24) is closed by a closure (25) at a point substantially below the middle, that an annular duct portion (24a) below the closure (25) has a discharge aperture (27), and that the blower (19) is placed in the lower part of the distillation apparatus (10), the mixture composed of liquid being distilled and of vapour being caused to flow from the heat exchange tube (17) via the portion of the annular flow duct above the closure (25) and through the central tube (22) to the blower (19) arranged to impart extra energy to the vapour and to conduct the vapour into the annular duct (24a) below the closure (25), whence the vapour discharges through the discharge aperture (27) into a condenser (28).

2. A distilling means according to claim 1, characterized in that the annular duct (24) contains a discharge connector (26) for removing water droplets.

3. A distilling means according to claim 1 or 2, characterized in that the droplet separator (18) is a droplet separator with helical vanes (20) and disposed in the upper part of the annular duct (24).

**Patentansprüche**

1. Nach dem Prinzip der Thermokompression arbeitende Destillationseinrichtung (10), mit einem Gehäuse (11), einem im Gehäuse (11) vorhandenen Kochraum (12) für die zu destillierende Flüssigkeit, einer Heizvorrichtung (13) für die Flüssigkeit, einer Leitung (14) für die Zufuhr der Flüssigkeit in den Kochraum (12), einem Gebläse (19) zur Zufuhr von zusätzlicher Energie zum aus der Flüssigkeit erzeugten Dampf, wobei die Temperatur des Dampfes auf der Auslassseite des Gebläses (19) zunimmt, und eine Auslassleitung (29) zum Entfernen des Destillats aus der Einrichtung (10) dient, deren Innenseite mindestens ein Wärmeaustauschrohr (17) hat, dem die Mischung aus der zu destillierenden Flüssigkeit und dem Dampf entlangfliessen, und mit einem nach dem Zentrifugaltrennverfahren arbeitenden Tropfenausscheider (18), dadurch gekennzeichnet, dass etwa in der Mitte der Einrichtung (10) ein Mittelrohr (22) angeordnet ist, in dem sich ein Innenrohr (23) befindet, so dass darin ein ringförmiger Strömungskanal (24) entsteht, der mittels eines Verschlusses (25) an einer Stelle oberhalb der Mitte geschlossen ist, dass ein ringförmiger Kanalteil (24a) unter dem Verschluss (25) eine Auslassöffnung (27) aufweist, und dass das Gebläse (19) im unteren Teil der Einrichtung (10) angeordnet ist, wobei die genannte Mischung vom Wärmeaustauschrohr (17) durch den Teil des Strömungskanals über dem Verschluss (25) und durch das Mittelrohr (22) zum Gebläse (19) fliesst, das zur Zufuhr von zusätzlicher Energie zum Dampf und zur Leitung des Dampfes in den ringförmigen Strömungskanal (24a) unterhalb des Verschlusses (25) dient, wenn der Dampf durch den Auslass (27) in einen Kondensator (28) entweicht.

2. Einrichtung nach Anspruch 1, dadurch gekennzeichnet, dass der Strömungskanal (24) einen Auslassanschluss (26) zum Entfernen von Wasserstropfen aufweist.

3. Einrichtung nach einem der Ansprüche 1 oder 2, dadurch gekennzeichnet, dass der Tropfenausscheider (18) schrauben-förmige Leitbleche (20) aufweist und sich im oberen Teil des ringförmigen Strömungskanals (24) befindet.

## Revendications

1. Appareil de distillation (10) fonctionnant selon le principe de thermocompression, comprenant un boîtier (11); une chambre d'ébullition (12), située dans le boîtier (11), pour du liquide devant être distillé; un moyen de chauffage (13), pour chauffer le liquide devant être distillé dans la chambre d'ébullition (12); un conduit d'alimentation (14) pour introduire dans la chambre d'ébullition (12) le liquide devant être distillé; un ventilateur (19) installé pour fournir une énergie supplémentaire à la vapeur provenant du liquide en cours de distillation dans la chambre d'ébullition (12), la température de la vapeur augmentant du côté décharge dudit ventilateur (19); un conduit de décharge (29) pour évacuer le distillat de l'appareil de distillation (10), l'espace interne de cet appareil de distillation (10) logeant au moins un tube d'échange thermique (17) le long duquel un mélange, composé de vapeur et de liquide à distiller, est destiné à s'écouler; et un séparateur de gouttelettes (18) fonctionnant selon le principe de la séparation centrifuge, caractérisé par le fait qu'un tube central (22) renfermant un tube interne (23) est implanté à l'intérieur de l'appareil de distillation (10), sensiblement au centre, un passage d'écoulement annulaire (24) étant ainsi délimité; par le fait que le passage annulaire (24) est fermé par une obturation (25) en un point situé sensiblement au-dessous du milieu; par le fait qu'une région (24a) du passage annulaire sous-jacente à l'obturation (25) présente un orifice de décharge (27); et par le fait quie le ventilateur (19) est installé dans la partie inférieure de l'appareil de distillation (10), le mélange composé de vapeur et de liquide en cours de distillation étant obligé à circuler à partir du tube d'échange thermique (17), par l'intermédiaire de la région du passage d'écoulement annulaire sus-jacente à l'obturation (25), en parcourant le tube central (22), jusqu'au ventilateur (19) agencé pour fournir une énergie supplémentaire à la vapeur et pour faire pénétrer cette vapeur dans le passage annulaire (24a), au-dessous de l'obturation (25), d'où la vapeur est déchargée dans un condenseur (28) à travers l'orifice de décharge (27).

2. Moyen de distillation selon la revendication 1, caractérisé par le fait que le passage annulaire (24) renferme un raccord d'évacuation (26) pour éliminer des gouttelettes d'eau.

3. Moyen de distillation selon la revendication 1 ou 2, caractérisé par le fait que le séparateur de gouttelettes (18) est un séparateur de gouttelettes muni d'ailettes hélicoïdales (20) et disposé dans la partie supérieure du passage annulaire (24).